(19) Europäisches Patentamt
European Patent Office
Office européen des brevets

(11) **EP 3 386 180 B1**

(12) **EUROPEAN PATENT SPECIFICATION**

(45) Date of publication and mention
of the grant of the patent:
**01.07.2020 Bulletin 2020/27**

(51) Int Cl.:
*H04N 3/14* (2006.01)       *H04N 5/33* (2006.01)
*H04N 17/00* (2006.01)

(21) Application number: **17164888.4**

(22) Date of filing: **05.04.2017**

(54) **METHOD AND SYSTEM FOR CALIBRATING AN INFRARED CAMERA**

VERFAHREN UND SYSTEM ZUR KALIBRIERUNG EINER INFRAROTKAMERA

PROCÉDÉ ET SYSTÈME POUR ÉTALONNER UNE CAMÉRA INFRAROUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.10.2018 Bulletin 2018/41**

(73) Proprietor: **Tecnobit S.L.
28521 Rivas-Vaciamadrid (ES)**

(72) Inventor: **MORENO SERRANO, CARLOS
13300 Valdepeñas (ES)**

(74) Representative: **Carvajal y Urquijo, Isabel et al
Clarke, Modet & Co.
Suero de Quiñones, 34-36
28002 Madrid (ES)**

(56) References cited:
**EP-A1- 1 253 779       EP-A1- 2 063 632
EP-A2- 2 512 125       WO-A1-03/077539
US-A1- 2011 108 717     US-A1- 2015 319 379**

**Description**

**Field of Invention**

The present invention belongs to the field of thermography. More specifically but not exclusively it relates to calibration techniques for infrared cameras or thermal imaging cameras that correct non-uniformity of detectors.

**State of the Art**

Infrared (IR) cameras need to be calibrated in order to properly form thermal images using IR radiation due to differences in the responsivity of IR photodetectors exposed to the same heat source. Without calibration, a fix pattern noise appears superposed onto the image, making it difficult to discern details in the scene.

IR cameras can be classified depending on the wave band they operate in, as well as the type of technology they use. The wave bands are commonly divided into Long Wave InfraRed (LWIR) from 7 to 15$\mu$m, Medium Wave InfraRed (MWIR) from 3 to 6$\mu$m, Short Wave InfraRed (SWIR) from 1 to 3$\mu$m or Near InfraRed (NIR) from 0.7 to 1 $\mu$m. IR photodetectors are used by IR cameras to acquire a thermal image or thermally recognize a scene. A relevant classification when considering IR photodetectors takes into account the temperature of operation. Cooled detectors operate at temperatures between -200ºC and -125ºC, and thus require cryogenic cooling systems, and uncooled detectors operate at room temperature. Cooled detector technology includes MCT (Mercury-Cadmium-Tellurium for MWIR and LWIR), InSb (Indium-Antimony for MWIR), QWIP (Quantum Well Infrared Photodetector for LWIR), and InAsGaSb superlattice IR detectors which can operate in all bands. Uncooled technologies include ASi and VOx for LWIR bolometers, InGaAs for SWIR and PbSe for MWIR.

Regardless of the type, IR cameras need to be calibrated to work under certain operation conditions. In addition, some types of IR photodetectors, such as those based on MCT, are less stable than other types such as InSb or the newer InAsGaSb superlattice. As a result, IR cameras installing IR photodetectors based on MCT require a calibration after each power-up. Document WO03077539 disclosing an improved infrared camera calibration which controls the thermal reference surface temperature.

Calibration is generally based on a temperature adjustment method. In this method, the photodetector is exposed to different values of temperature using a blackbody as an IR reference source. The whole procedure takes quite some time until it is completed which means the setup time of the camera until it is fully operational is longer. This is a drawback, particularly when the detector must be frequently calibrated

Consequently, reducing the overall calibration time and avoiding the use of precise blackbody thermoelectric coolers would be desirable, which would allow reducing costs while increasing the camera reliability at the same time.

**Brief description of the invention**

An infrared (IR) camera typically comprises an array of photodetectors which collects the incident radiation. Each photodetector is associated with a pixel and tends to have its own characteristics, which are defined as an offset value and scale factor. A non-uniformity correction (NUC) calibration applicable to medium and long wave infrared (MWIR, LWIR) photodetectors is disclosed by the present invention.

As indicated, conventional NUC calibration is based on changing the temperature of a blackbody, then correction coefficients for every integration time used in an IR camera are calculated. The integration time is also known as stare time and refers to the amount of time that the IR photodetector is receiving or capturing energy from the scene in the IR wavelength range. Integration time can be seen in IR cameras as the equivalent to exposition time in visible cameras.

The present invention is set out in the independent claims. Preferred or advantageous embodiments are defined in dependent claims. The invention adopts a different approach to calculate correction coefficients for each integration time. Integration time is associated with the scene temperature. Advantageously, instead of temperature changes, IR photodetector's responsivity to changes in the integration time is used to calibrate the IR camera. Thus, correction coefficients are calculated using differences in detector response when exposed to changes in the integration time. A constant temperature value may be set but only once during the calibration, for instance by means of a blackbody.

The present teachings are particularly suitable for those cameras in which it is necessary to perform a NUC calibration every time a power-up occurs. The calibration coefficients obtained in factory are usually insufficiently accurate. The materials the detector is made of are sensitive to many factors (e.g. the cooling temperature or the initial conditions).

A remarkable aspect of the present invention relates to a calibration method and system that corrects infrared detectors non-uniformity in IR cameras, while reducing the calibration time in factory or the start-up time in IR cameras that uses MCT detectors.

An advantage of the present invention relates to complexity reduction for the test equipment, being only necessary a constant temperature reference value instead of several values. The way of calculating the coefficients, namely offsets and scale factors, is similar to the approach followed in conventional methods.

As to MCT-type photodetectors, the present invention allows to drastically simplify the mechanism needed to generate the temperatures for the detector, avoiding the use of a thermoelectric cooler (TEC) and the associated electronics. Nonetheless, test equipment of conventional existing techniques can be used as well.

## Brief description of the figures

The invention will now be described with reference to the following drawings of embodiments in which:

FIG. 1 shows a flowchart describing the steps of the calibration procedure.
FIG. 2 illustrates a typical setup to calibrate and test infrared cameras.
FIG. 3 illustrates a graph showing the responsivity of the IR detector (average of the pixels of the detector) when the temperature is maintained constant and the integration time is changed for a set of different temperatures.
FIG. 4 illustrates a graph showing the responsivity of the detector (average of the pixels of the detector) when the integration time is maintained constant and the temperature is changed for a set of different integration times.
FIG. 5 shows a histogram distribution of intensities of a thermal image.
FIG. 6 is a functional block diagram of an IR camera.
FIG. 7 is an example of a timing diagram for the frame acquisition with timing parameters.

## Detailed description of the invention

For better understanding, the present invention will be now described in more detail using the referenced drawings.

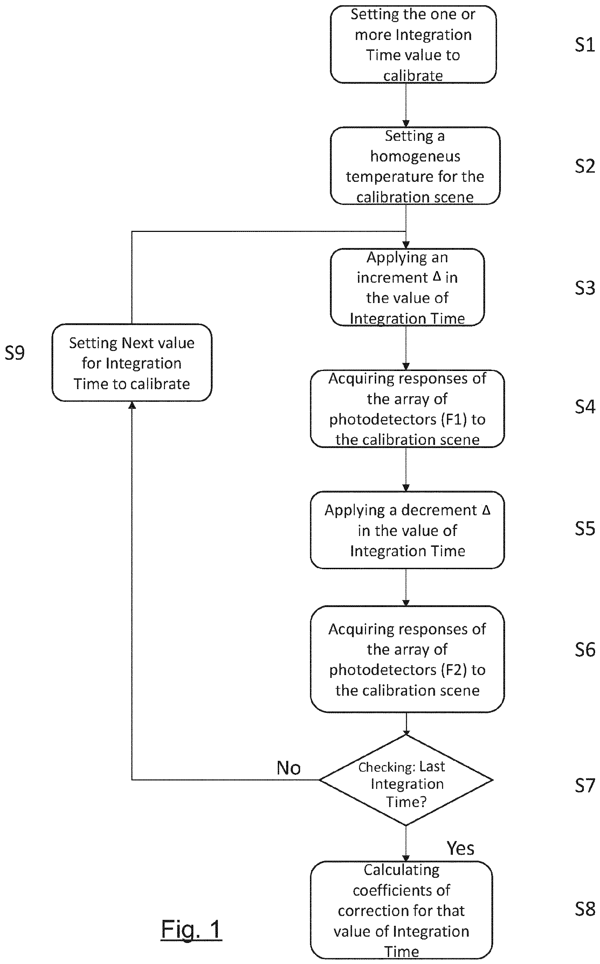

**FIG. 1** describes the main steps to perform NUC calibration for an IR camera, according to the core of an embodiment of the invention.

The first step **S1** sets a value for the integration time. A set of integration time values is required prior to starting the calibration process. These values shall be selected based on the application and operation conditions of the IR camera, normally covering an extended range of temperatures of the scenes to be acquired afterwards. As an example, if the IR camera is used in applications with cold scenes, it needs a set of integration time values that differs from hot scenes. Preferably, integration time value shall be selected such to achieve a minimum of approximately 50% well-fill and a maximum value not to saturate the photodetector. The term "well-fill" refers to the amount of charge developed by each photodetector in response to the incident radiation.

. The use of different suitable *well fill* values is desirable, according to the characteristics of the IR camera being calibrated. As general rule, five to six different values for the integration time should be enough for the majority of applications.

In the second step **S2,** a temperature value is set as a reference. This may be accomplished by using a blackbody **400** or defocusing a calibration scene, as will be explained later. This temperature value is generally chosen in a way that the histogram distribution of intensities of the image taken by the camera **100,** is centered within the dynamic range of the output. By doing so, the detector 50% *well-fill* is achieved. The dynamic range parameter is the range of values comprised between the minimum and the maximum value of the electrical output of the detector, converted to a digital range. The dynamic range of an IR camera **100** is usually available as a technical specification.

In the third step **S3,** the integration time is increased in such a way that there is a change in the output, preferably, of approximate 5% of the dynamic range. It has been experimentally confirmed that a 5% of change in the output is an advantage when obtaining a set of coefficients that provide a proper correction.

In the fourth step **S4,** N frames of the thermal image are acquired and the average frame F1 is calculated for that value of the integration time, according to the expression:

$$F1 = \frac{\sum_{i=1}^{N} Fi}{N}$$

Where $F_i$ are the frames acquired. Then the average frame F1 is recorded.

The N parameter is established based on the noise of the image which must be measured on the camera. The number N of frames must be selected. Typical values of N are those between 8 and 16. The number of frames N can be experimentally adjusted.

In the fifth step **S5,** pursuing the same purpose of **S3,** the integration time is decremented, in this case, by a factor that produces an output change of a 5% of the dynamic range. This percentage is appropriate for most applications.

In the sixth step **S6** (likewise step **S4**), it is performed an acquisition of N frames and then they are averaged (F2) and recorded, maintaining the same value of integration time obtained in **S5**.

$$F2 = \frac{\sum_{i=1}^{N} Fi}{N}$$

The seventh step **S7** checks whether all the integration time values have been considered, if not, the process continues in step **S9**. Alternatively, if all the integration time values have been calibrated, the process continues in step **S8**, which aims at calculating the coefficient associated with each integration time. Coefficients for every integration time may be obtained using the averaged frames F1 and F2, using a *least square fitting* to obtain first order coefficients that, finally, will give the correction tables to be used by the camera **100**.

By way of example, the aforementioned calibration steps are performed with typical values. In step **S1** the integration time is set to 600 μs. In step **S2** the temperature source is set to 30°C. The integration time to calibrate has a value of 600 μs. In **S3**, the integration time is increased up to 700 μs. In **S4**, 8 frames are obtained and the average of them is calculated (F1). Then in **S5**, the time is decreased down to 500 μs. In step **S6**, the capture of 8 frames is performed and the average value (F2) is calculated. In the step **S7**, a check is performed to verify whether the previous integration time value is the last one or not. If there is another integration time value to consider, the process performs step **S8**. Otherwise, the process performs in step **S9** the calculation of the coefficients using F2 and F1.

Finally, the IR camera applies the coefficients of correction to the pixels of the IR detector as can be seen in the following example of correction of a 6x4 matrix of pixels using a set of coefficients of gain factor and offset:

$$P_{i,j}^{COR} = G_{i,j} \times P_{i,j} + O_{i,j}$$

where $P^{COR}_{i,j}$ is the pixel corrected, $P_{i,j}$ is the output raw pixel from the detector and $G_{i,j}$ and $O_{i,j}$ are the sets of gains and offsets calculated by the processor. The indexes *i,j* indicates line *i*, column *j*. Where *i,j* covers the resolution of the detector.

$$
\begin{bmatrix}
7041 & 7041 & 7041 & 7041 \\
7041 & 7041 & 7041 & 7041 \\
7041 & 7041 & 7041 & 7041 \\
7041 & 7041 & 7041 & 7041 \\
7041 & 7041 & 7041 & 7041 \\
7041 & 7041 & 7041 & 7041
\end{bmatrix} =
$$

$$
=
\begin{bmatrix}
1.0396 & 1.0316 & 1.0272 & 1.0196 \\
1.0220 & 1.0308 & 1.0216 & 1.0184 \\
1.0312 & 1.0332 & 1.0260 & 1.0288 \\
1.0396 & 1.0328 & 1.0308 & 1.0248 \\
1.0468 & 1.0420 & 1.0456 & 1.0420 \\
1.0348 & 1.0400 & 1.0392 & 1.0288
\end{bmatrix}
\times
\begin{bmatrix}
7213 & 7192 & 7146 & 7100 \\
7252 & 7352 & 7251 & 7242 \\
7268 & 7280 & 7159 & 7222 \\
7283 & 7262 & 7290 & 7129 \\
7316 & 7322 & 7354 & 7354 \\
7350 & 7438 & 7448 & 7291
\end{bmatrix} +
$$

$$
+
\begin{bmatrix}
-458 & -379 & -300 & -198 \\
-371 & -538 & -367 & -334 \\
-454 & -481 & -304 & -389 \\
-531 & -460 & -474 & -265 \\
-618 & -589 & -649 & -622 \\
-565 & -695 & -699 & -460
\end{bmatrix}
$$

The steps **S1** to **S9** may be repeated for different values of temperature, so that the camera **100** is calibrated for a wider range of values of temperature.

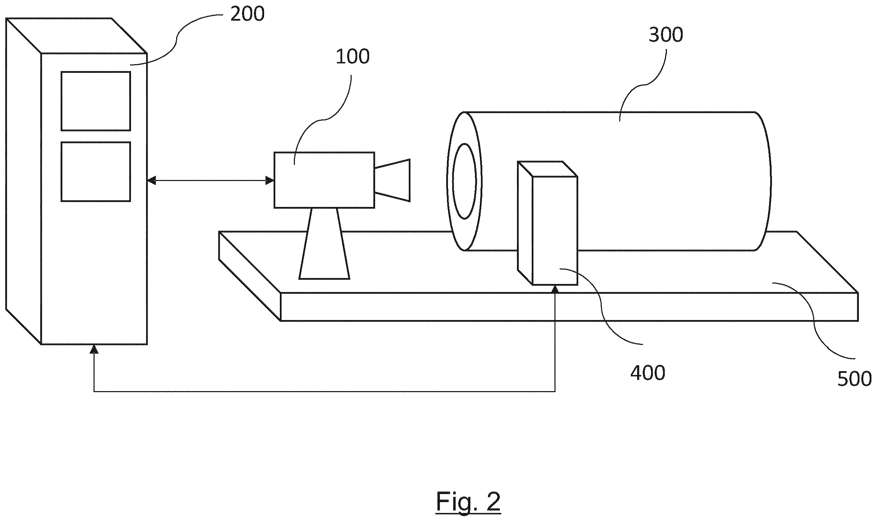

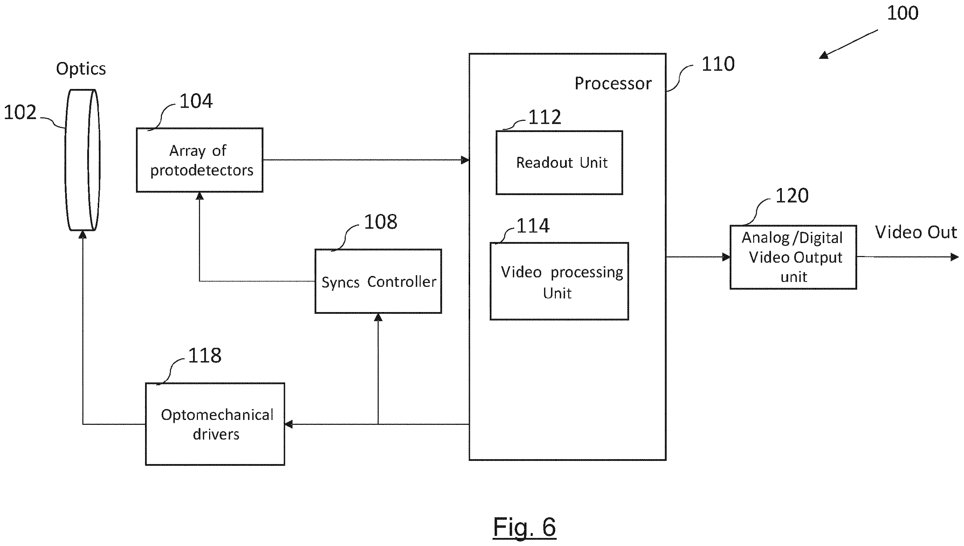

**FIG. 2** depicts a possible setup for testing IR imaging systems. It includes an isolation table **500,** a collimator **300** with a blackbody **400,** IR targets and a test equipment **200** to capture the images from the IR camera **100.** The IR camera **100** is installed in a pedestal in front of the collimator **300.** The collimator **300** accurately projects patterns of infrared radiation, simulating the effect they come from a large distance (infinity), thus testing the performance of the IR camera. The test equipment **200** selects the target being used as well as the temperature selected for the blackbody. The test equipment **200** is also used to set up and control the camera **100** under calibration, allowing the selection of the integration times and recording the images needed to perform the calibration. In addition to this setup, the calibration may be performed using the IR camera itself, explained when referring to FIG. 6.

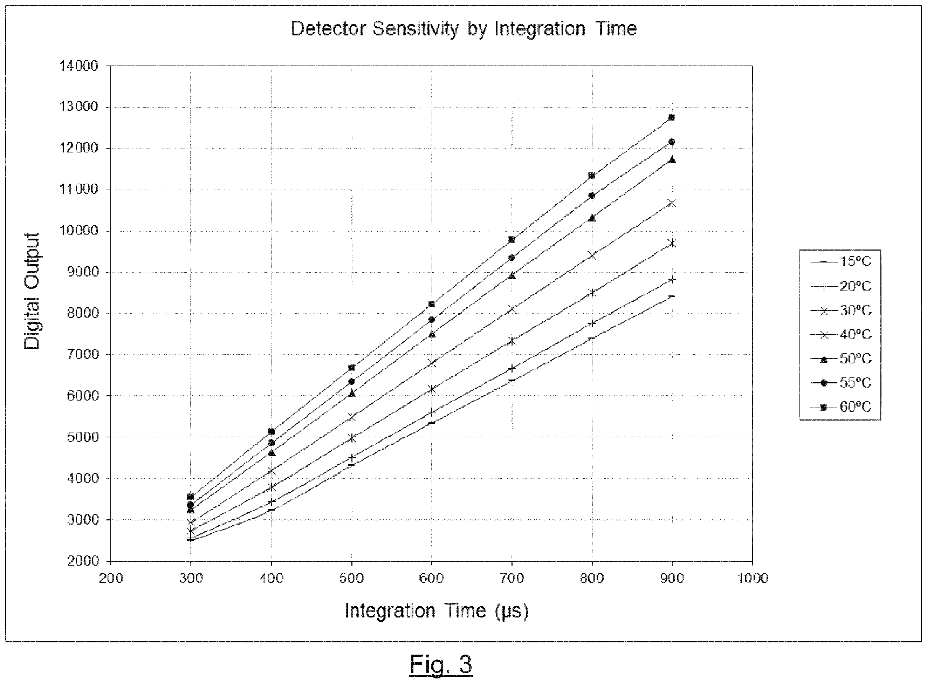

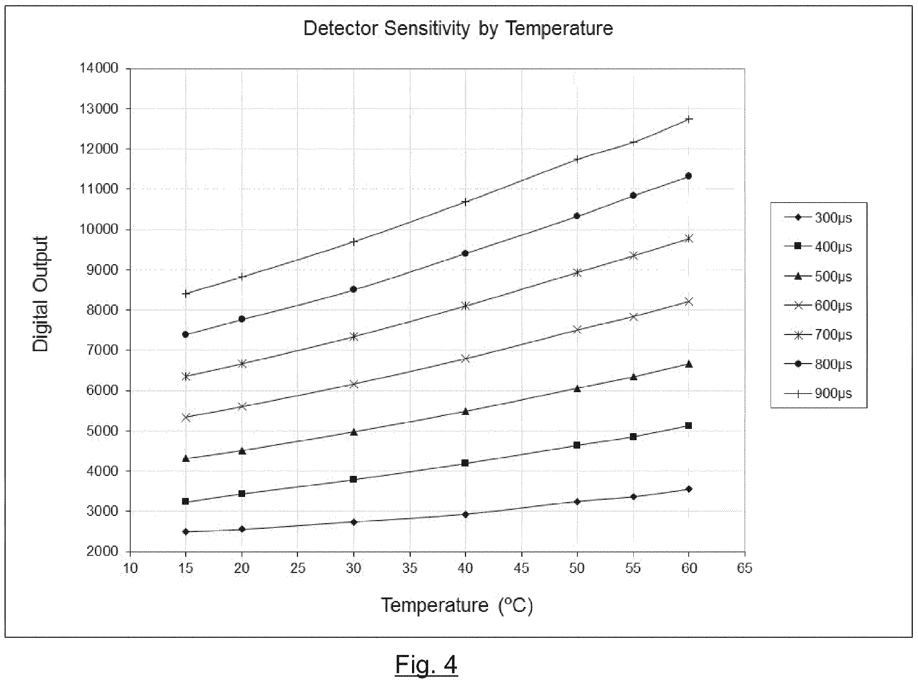

**FIG. 3** and **FIG. 4** illustrate the response of a Long Wave (8 - 12 $\mu$m spectral band) IR MCT detector to changes in temperature and integration time, respectively. In particular, FIG. 4 shows several curves representing the responsivity of the detector. Each curve indicates the response for a particular integration time (300 $\mu$s, 400 $\mu$s, 500 $\mu$s, 600 $\mu$s, 700 $\mu$s, 800 $\mu$s and 900 $\mu$s) while temperature changes. It can be observed that the effect of changing the temperature, while holding the integration time constant, is similar to the effect of changing the integration time when the temperature is constant. In FIG. 3 and FIG. 4, the Y-axis represents a dimensionless output with digital values corresponding to the average of pixels of an image taken. The IR camera photodetectors provide an electrical measure in volts according to the variations of infrared intensity and this electrical measure is digitized and converted to a digital value (e.g. between 0 and 16383). Thus, the digital output is a value of intensity or gray level of the image, since the image formed in an infrared camera is black and white.

Note: Certain thermography applications provide images in pseudo-color, that means a specific color corresponding to a certain temperature is added for convenience.

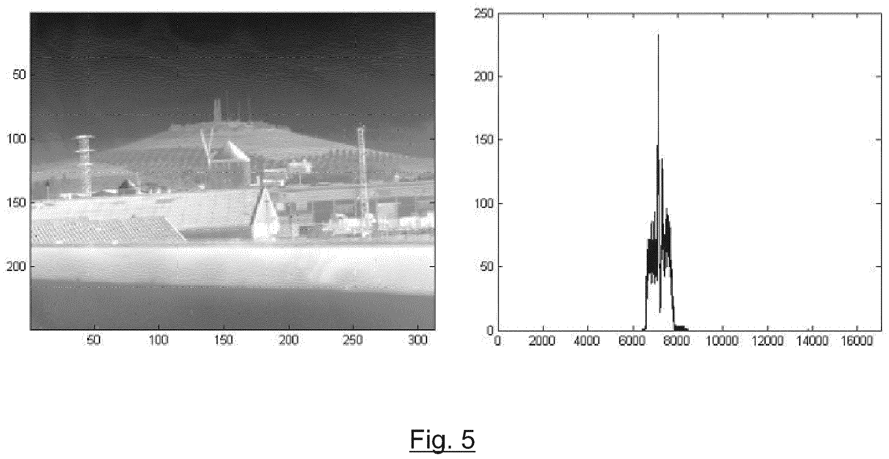

**FIG. 5** shows an example of a thermal image acquired with a LWIR camera with a MCT detector of 320x256 pixels resolution and the histogram distribution of intensities corresponding to such image.

**FIG. 6** illustrates main elements in an IR camera of a specific embodiment. A software application may be installed on the IR camera **100** to perform, when running, the calibration steps S1 to S9 disclosed above.

As depicted, the IR camera **100** includes a processor **110** that executes instructions according to the software application and manages other elements of the IR camera **100** taking part in the calibration. The processor **110** may comprise a readout unit **112** that composes the frames and a video processing unit **114** where responses of the array of photodetectors **104** are adjusted.

For instance, a synchronization unit **108** is commanded by the processor **110** to set a specific integration time value for the array of photodetector **104** according to steps S3, S5 or S9. Normally, the synchronization unit **108** is used to generating sync signals needed by the array of photodetectors **104** to properly collect IR radiation. Thus, the synchronization unit **108** is controlled by the processor **110.**

Typically, to obtain a constant temperature, the IR camera **100** may focus at a constant temperature source like a blackbody. An equivalent procedure is to completely defocus a calibration scene, due to the fact that by means of blurring objects in scene, a homogenous temperature and a good temperature average is obtained. This alternative is particularly suitable for calibration in field. Thus, the processor **110** may command an optomechanical driver **118** to automatically defocus the optics **102** for the calibration scene. Typically, optomechanical drivers are those elements involved in optics movement (as zoom or focus) such as motors, position sensors and electronics. Then, the processor **110** commands a readout unit **112** to acquire a certain number of frames (responses of the array of pixels) according to the adjusted integration time value. This acquisition is done for an increment and a decrement of the integration time value that is applied by the synchronization controller **108.** After that, given the integration time, the processor **110** calculates the correction coefficients that apply to the array of photodetectors **104.** Then, a video processing unit **114** is fed with the correction coefficients to be used in the video output unit **120** (which may be analog or digital). Optionally, video output unit **120** comprises the electronic circuitry to make the adaptations needed to output the video signal in analog or digital format. The calibration process can be triggered by an operator, in such a way that non-uniformity correction calibration can be performed on field while the IR camera **100** is deployed in operation.

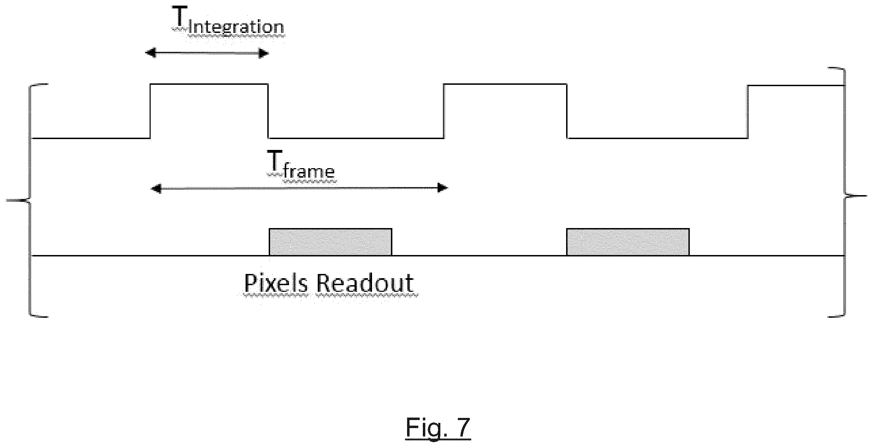

**FIG. 7** relates to a typical reading-out mode implemented by a readout unit **112** which are compatible with the previous teachings. It shows a timing diagram as an example of acquisition of frames that follows an *integration-then-read* mode. $T_{frame}$ is the period of acquisition of frames, a typical value for video applications is 20ms (50Hz), although recent photodetectors allow higher frame rates. Titration is the integration time and typical values range from hundreds of microseconds to tens of milliseconds. The readout of pixels is performed by a readout unit **112** after the integration of the scene is completed and normally last some milliseconds. Other readout mode is *integration-while-read,* in which the frame integration is performed and stored and the readout is done during the integration of the next frame. Integration-while-read approach has the advantage of better frame rate but introduces a frame of delay. The integration-then-read approach has a frame rate limited by the integration time plus the read-out time.

The above embodiments are presented as non-limiting examples to provide a thorough understanding of the invention. However, it is apparent to one skilled in the art that the present teachings may be practiced without these specific details or with equivalent arrangements.

**Claims**

1. A method for calibrating an infrared camera (100), the method comprising the step of:

   - setting an integration time value for an array of photodetectors (104) of the infrared camera (100) and acquiring a calibration scene having a homogeneous temperature;

   **characterized in that** the method further comprises the steps of:

   - applying a plurality of variations by applying an increment and a decrement in the integration time value and reading out corresponding thermal responses for the array of photodetectors (104) while maintaining constant the homogeneous temperature of the calibration scene;
   - averaging the plurality of thermal responses of the array of photodetectors (104) for each variation applied to the integration time value and calculating a plurality of coefficients of correction for the array of photodetectors (104).

2. The method of claim 1, wherein the steps are repeated a plurality of times and wherein, each time the method is performed, a different integration time value is set.

3. The method of claim 2, wherein a different time interval value is set each time according to an expected range of temperature values.

4. The method according to any of claims 1 to 3, wherein the temperature of the calibration scene is selected according to the dynamic range of the array of photodetectors (104) of the camera (100), so that the response of the photodetectors (204) has a centered distribution of intensities.

5. The method according to any of claims 1 to 4, wherein the integration time value is set to achieve at least a 50% of photodetector well-fill.

6. The method according to any of claims 1 to 5, wherein each variation on the integration time value previously set produces a response change, either by a decrease or by an increase of a 5% of the dynamic range.

7. The method according to any of claims 1 to 6, wherein the step of acquiring a calibration scene having a homogeneous temperature is performed by defocusing the optics (102) of the camera (100).

8. A computer program product for calibrating an infrared camera (100), that includes computer code instructions that, when executed by a processor, causes the processor to perform the methods of any of claims 1 to 7.

9. A system for calibrating an infrared camera (100), the system comprising:

   a processor (110) configured to instruct a synchronization unit (108) to set an integration time value for the array of photodetectors (104) of the infrared camera (100) and to acquire a calibration scene having a homogeneous temperature;
   **characterized in that** the processor (110) is further configured to apply a plurality of variations by applying an increment and a decrement in the integration time value and to instruct a read-out unit (112) to read out thermal responses for the array of photodetectors (104) while maintaining constant the homogeneous temperature of the calibration scene;
   the processor (110) additionally configured to instruct a video processing unit (114) to average the plurality of thermal responses of the array of photodetectors (104) for each variation applied to the integration time value and to calculate a plurality of coefficients of correction for the array of photodetectors (104).

10. The system according to claim 9, wherein the temperature of the calibration scene is selected according to the dynamic range of the array of photodetectors (104) of the camera (100), so that the response of the photodetectors (104) has a centered distribution of intensities.

**11.** The system according to claims 9 or 10, wherein the integration time value is set to achieve at least a 50% of photodetector well-fill.

**12.** The system according to any of claims 9 to 11, wherein each variation on the integration time value previously set produces a response change, either by a decrease or by an increase of a 5% of the dynamic range.

**13.** The system according to any of claims 9 to 12, wherein a homogeneous temperature is obtained by the processor (110) instructing the optomechanical driver (118) to defocus the optics (102) of the camera (100) to obtain a homogeneously blurred calibration scene.

**14.** An infrared camera (100) comprising the system for calibrating according to any of claims 9 to 13.

**Patentansprüche**

**1.** Verfahren zur Kalibrierung einer Infrarotkamera (100), wobei das Verfahren folgenden Schritt umfasst:

- Einstellen eines Integrationszeitwerts für eine Photodetektormatrix (104) der Infrarotkamera (100) und Erfassen einer Kalibrierungsszene mit einer homogenen Temperatur;

**dadurch gekennzeichnet, dass** das Verfahren ferner die folgenden Schritte umfasst:

- Ausführen einer Vielzahl von Änderungen durch Inkrementieren und Dekrementieren des Integrationszeitwerts und Auslesen der entsprechenden thermischen Reaktionen für die Photodetektormatrix (104) unter Konstanthalten der homogenen Temperatur der Kalibrierungsszene;
- Mittelwertbildung der Vielzahl von thermischen Reaktionen der Photodetektormatrix (104) der jeweils am Integrationszeitwert ausgeführten Änderungen und Berechnung einer Vielzahl von Korrekturkoeffizienten für die Photodetektormatrix (104).

**2.** Verfahren nach Anspruch 1, wobei die Schritte mehrfach wiederholt werden und wobei bei jeder Durchführung des Verfahrens ein anderer Integrationszeitwert eingestellt wird.

**3.** Verfahren nach Anspruch 2, wobei je nach einem erwarteten Temperaturwertbereich jedes Mal ein anderer Zeitintervallwert eingestellt wird.

**4.** Verfahren nach einem der Ansprüche 1 bis 3, wobei die Temperatur der Kalibrierungsszene entsprechend dem Dynamikumfang der Photodetektormatrix (104) der Kamera (100) ausgewählt wird, so dass die Reaktion der Photodetektoren (104) eine zentrierte Intensitätsverteilung aufweist.

**5.** Verfahren nach einem der Ansprüche 1 bis 4, wobei der Integrationszeitwert so eingestellt ist, dass mindestens 50 % des Photodetektor-Wellfills erreicht wird.

**6.** Verfahren nach einem der Ansprüche 1 bis 5, wobei jede Änderung des zuvor eingestellten Integrationszeitwerts eine veränderte Reaktion in Form von entweder einer Abnahme oder einer Zunahme um 5 % des Dynamikumfangs bewirkt.

**7.** Verfahren nach einem der Ansprüche 1 bis 6, wobei der Schritt des Erfassens einer Kalibrierungsszene mit einer homogenen Temperatur durch Defokussieren der Optik (102) der Kamera (100) durchgeführt wird.

**8.** Computerprogramm-Produkt zur Kalibrierung einer Infrarotkamera (100), das Computercode-Befehle enthält, die bei ihrer Abarbeitung durch einen Prozessor bewirken, dass der Prozessor die Verfahren nach einem der Ansprüche 1 bis 7 ausführt.

**9.** System zur Kalibrierung einer Infrarotkamera (100), wobei das System umfasst:

einen Prozessor (110), der dazu ausgelegt ist, eine Synchronisationseinheit (108) anzuweisen, einen Integrationszeitwert für die Photodetektormatrix (104) der Infrarotkamera (100) einzustellen und eine Kalibrierungsszene mit einer homogenen Temperatur zu erfassen;

**dadurch gekennzeichnet, dass** der Prozessor (110) ferner dazu ausgelegt ist, eine Vielzahl von Änderungen durch Inkrementieren und Dekrementieren des Integrationszeitwerts auszuführen und eine Ausleseeinheit (112) anzuweisen, thermische Reaktionen für die Photodetektormatrix (104) unter Konstanthalten der homogenen Temperatur der Kalibrierungsszene auszulesen;

der Prozessor (110) zudem dazu ausgelegt ist, eine Bildverarbeitungseinheit (114) anzuweisen, die Vielzahl von thermischen Reaktionen der Photodetektormatrix (104) der jeweils am Integrationszeitwert ausgeführten Änderungen zu mitteln und eine Vielzahl von Korrekturkoeffizienten für die Photodetektormatrix (104) zu berechnen.

10. System nach Anspruch 9, wobei die Temperatur der Kalibrierungsszene entsprechend dem Dynamikumfang der Photodetektormatrix (104) der Kamera (100) ausgewählt wird, so dass die Reaktion der Photodetektoren (104) eine zentrierte Intensitätsverteilung aufweist.

11. System nach Anspruch 9 oder 10, wobei der Integrationszeitwert so eingestellt ist, dass mindestens 50 % des Photodetektor-Wellfills erreicht wird.

12. System nach einem der Ansprüche 9 bis 11, wobei jede Änderung des zuvor eingestellten Integrationszeitwerts eine veränderte Reaktion in Form von entweder einer Abnahme oder einer Zunahme um 5 % des Dynamikumfangs bewirkt.

13. System nach einem der Ansprüche 9 bis 12, wobei eine homogene Temperatur dadurch erreicht wird, dass der Prozessor (110) den optomechanischen Treiber (118) anweist, die Optik (102) der Kamera (100) zur Erzeugung einer homogen unscharfen Kalibrierungsszene zu defokussieren.

14. Infrarotkamera (100), die das System zur Kalibrierung nach einem der Ansprüche 9 bis 13 umfasst.

## Revendications

1. Méthode pour étalonner une caméra infrarouge (100), la méthode comprenant l'étape de :

    - régler une valeur du temps d'intégration pour une matrice de photodétecteurs (104) de la caméra infrarouge (100) et acquérir une scène d'étalonnage ayant une température homogène ;

    **caractérisé en ce que** la méthode comprend en outre les étapes de :

    - appliquer une pluralité de variations en appliquant un incrément et une décrémentation de la valeur du temps d'intégration et lire les réponses thermiques correspondantes pour la matrice de photodétecteurs (104) tout en maintenant constante la température homogène de la scène d'étalonnage ;
    - faire la moyenne de la pluralité de réponses thermiques de la matrice de photodétecteurs (104) pour chaque variation appliquée à la valeur du temps d'intégration et calculer une pluralité de coefficients de correction pour la matrice de photodétecteurs (104).

2. Méthode selon la revendication 1, dans laquelle les étapes sont répétées une pluralité de fois et dans laquelle, chaque fois que la méthode est exécutée, une valeur du temps d'intégration différente est fixée.

3. Méthode selon la revendication 2, dans laquelle une valeur d'intervalle de temps différente est fixée chaque fois en fonction d'une gamme attendue de valeurs de température.

4. Méthode selon l'une des revendications 1 à 3, dans laquelle la température de la scène d'étalonnage est sélectionnée en fonction de la gamme dynamique de la matrice de photodétecteurs (104) de la caméra (100), de sorte que la réponse des photodétecteurs (104) présente une distribution centrée des intensités.

5. Méthode selon l'une des revendications 1 à 4, dans laquelle la valeur du temps d'intégration est fixée de manière à obtenir au moins 50 % de remplissage du puits du photodétecteur.

6. Méthode selon l'une des revendications 1 à 5, dans laquelle chaque variation de la valeur du temps d'intégration fixée précédemment produit un changement de réponse, soit par une diminution soit par une augmentation de 5 % de la gamme dynamique.

7. Méthode selon l'une des revendications 1 à 6, dans laquelle l'étape d'acquisition d'une scène d'étalonnage ayant une température homogène est réalisée en défocalisant l'optique (102) de la caméra (100).

8. Produit de programme informatique pour l'étalonnage d'une caméra infrarouge (100), qui comprend des instructions de code informatique qui, lorsqu'elles sont exécutées par un processeur, amènent ce dernier à exécuter les méthodes de l'une des revendications 1 à 7.

9. Système de calibrage d'une caméra infrarouge (100), le système comprenant :

un processeur (110) configuré pour ordonner à une unité de synchronisation (108) de fixer une valeur du temps d'intégration pour la matrice de photodétecteurs (104) de la caméra infrarouge (100) et d'acquérir une scène d'étalonnage ayant une température homogène ;
**caractérisé en ce que** le processeur (110) est en outre configuré pour appliquer une pluralité de variations en appliquant un incrément et une décrémentation de la valeur du temps d'intégration et pour ordonner à une unité de lecture (112) de lire les réponses thermiques pour la matrice de photodétecteurs (104) tout en maintenant constante la température homogène de la scène d'étalonnage ;
le processeur (110) est en outre configuré pour ordonner à une unité de traitement vidéo (114) de faire la moyenne de la pluralité de réponses thermiques de la matrice de photodétecteurs (104) pour chaque variation appliquée à la valeur du temps d'intégration et de calculer une pluralité de coefficients de correction pour la matrice de photodétecteurs (104).

10. Système selon la revendication 9, dans lequel la température de la scène d'étalonnage est sélectionnée en fonction de la gamme dynamique de la matrice de photodétecteurs (104) de la caméra (100), de sorte que la réponse des photodétecteurs (104) présente une distribution centrée des intensités.

11. Système selon les revendications 9 ou 10, dans lequel la valeur du temps d'intégration est fixée pour obtenir au moins 50 % de remplissage du puits du photodétecteur.

12. Système selon l'une des revendications 9 à 11, dans lequel chaque variation de la valeur du temps d'intégration précédemment fixée produit un changement de réponse, soit par une diminution soit par une augmentation de 5 % de la gamme dynamique.

13. Système selon l'une des revendications 9 à 12, dans lequel une température homogène est obtenue par le processeur (110) qui ordonne au pilote optomécanique (118) de défocaliser l'optique (102) de la caméra (100) pour obtenir une scène d'étalonnage floue de manière homogène.

14. Caméra infrarouge (100) comprenant le système d'étalonnage selon l'une des revendications 9 à 13.

Fig. 1

| | |
|---|---|
| Setting the one or more Integration Time value to calibrate | S1 |
| Setting a homogeneus temperature for the calibration scene | S2 |
| Applying an increment Δ in the value of Integration Time | S3 |
| Acquiring responses of the array of photodetectors (F1) to the calibration scene | S4 |
| Applying a decrement Δ in the value of Integration Time | S5 |
| Acquiring responses of the array of photodetectors (F2) to the calibration scene | S6 |
| Checking: Last Integration Time? | S7 |
| Calculating coefficients of correction for that value of Integration Time | S8 |
| Setting Next value for Integration Time to calibrate | S9 |

EP 3 386 180 B1

Fig. 3

Detector Sensitivity by Temperature

Fig. 4

EP 3 386 180 B1

Fig. 5

EP 3 386 180 B1

Optics

102

104

Array of protodetectors

108

Syncs Controller

118

Optomechanical drivers

100

Processor

110

112

Readout Unit

114

Video processing Unit

120

Analog /Digital Video Output unit

Video Out

<u>Fig. 6</u>

$T_{Integration}$

$T_{frame}$

Pixels Readout

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03077539 A